# EUROPEAN PATENT APPLICATION

(11) **EP 4 783 137 A1**
(43) Date of publication of application: **29.07.2026**
(21) Application number: 25154330.2
(22) Date of filing: 28.01.2025
(51) Int. Cl.: G07C 5/08, G07C 5/00, G06Q 50/02, G06Q 50/08, G08G 1/00, B60P 1/04

(54) **RECORDING AN EVENT ASSOCIATED WITH AN OPERATING POINT OF A MINING VEHICLE**

(71) Applicant: Sandvik Mining and Construction Oy, 33330 Tampere (FI)
(72) Inventor: VAARA, Juho, 33330 Tampere (FI)
(74) Representative: Sandvik

(57) **Abstract**

A method for detecting an event of a mining vehicle may comprise: receiving a configuration of an operating point, wherein the configuration of the operating point comprises a position of the operating point and a requested heading of the mining vehicle for the operating point; determining the mining vehicle to be in proximity of the operating point; determining a heading of the mining vehicle in the proximity of the operating point; detecting a change in weight data of the mining vehicle in the proximity of the operating point; and recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

## Description

### TECHNICAL FIELD

Various example embodiments generally relate to the field of mining vehicles. Some example embodiments relate to detecting and recording an event associated with an operating point configured for a mining vehicle.

### BACKGROUND

In various applications, such as for example underground mining, mining vehicles such as drill rigs, mobile bolter machines, loaders, or dumpers may be operated manually or their operations may be automated with a mining automation system. In mining automation systems, there may be one or more mining machines autonomously operating on a worksite, for example travelling along configured routes inside a mine. Alternatively, mining vehicles may be manually operated to perform desired tasks.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for detecting an event of a mining vehicle is disclosed. The apparatus may comprise: at least one processor; and at least one memory including computer program code, the at least one memory and the computer program code configured to, with the at least one processor, cause the apparatus at least to: receive a configuration of an operating point, wherein the configuration of the operating point comprises a position of the operating point and a requested heading of the mining vehicle for the operating point; determine the mining vehicle to be in proximity of the operating point; determine a heading of the mining vehicle in the proximity of the operating point; detect a change in weight data of the mining vehicle in the proximity of the operating point; and record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to a second aspect, a method for detecting an event of a mining vehicle is disclosed. The method may comprise: receiving a configuration of an operating point, wherein the configuration of the operating point comprises a position of the operating point and a requested heading of the mining vehicle for the operating point; determining the mining vehicle to be in proximity of the operating point; determining a heading of the mining vehicle in the proximity of the operating point; detecting a change in weight data of the mining vehicle in the proximity of the operating point; and recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to a third aspect, an apparatus for detecting an event of a mining vehicle is disclosed. The apparatus may comprise: means for receiving a configuration of an operating point, wherein the configuration of the operating point comprises a position of the operating point and a requested heading of the mining vehicle for the operating point; means for determining the mining vehicle to be in proximity of the operating point; means for determining a heading of the mining vehicle in the proximity of the operating point; means for detecting a change in weight data of the mining vehicle in the proximity of the operating point; and means for recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to a fourth aspect, a computer program, a computer program product, or a (non-transitory) computer-readable medium for detecting an event of a mining vehicle is disclosed. The computer program, computer program product, or (non-transitory) computer-readable medium may comprise program instructions which, when executed by an apparatus, cause the apparatus at least to: receive a configuration of an operating point, wherein the configuration of the operating point comprises a position of the operating point and a requested heading of the mining vehicle for the operating point; determine the mining vehicle to be in proximity of the operating point; determine a heading of the mining vehicle in the proximity of the operating point; detect a change in weight data of the mining vehicle in the proximity of the operating point; and record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining vehicle;
FIG. 2 illustrates an example of a mining vehicle communicatively coupled to an external control system;
FIG. 3 illustrates an example of an articulated mining vehicle;
FIG. 4 illustrates an example of a mining automation system;
FIG. 5 illustrates an example of a flow chart for recording event(s) associated with operating point(s) configured for a mining vehicle;
FIG. 6 illustrates an example of operating points along a route inside a mining tunnel;
FIG. 7 illustrates an example of an apparatus configured to practise one or more example embodiments; and
FIG. 8 illustrates an example of a method for recording an event of a mining vehicle.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Mining vehicles may be operated manually or under control of a mining automation system. For example, a mining vehicle or a remote operation station may be configured to provide a user interface, including for example a three-dimensional (3D) visualization of a mine, to enable a user to select route start position, end position, and/or one or more operating points for a mining vehicle. An operating point may comprise a position configured for performing an operation by the mining vehicle. The operation may comprise an operation or a task assigned to the mining vehicle. The position may be located within a mine or some other working area of the mining vehicle. Examples of operating points include, but are not limited to, a loading point and a dumping point. A loading point may comprise a position within a mine, the position being configured for loading mining material on a mining vehicle, for example on a bucket of or dump box of the mining vehicle. A dumping point may comprise a position within a mine, the position being configured for dumping mining material, for example from the bucket or dump box of the mining vehicle.

Detecting events associated with the operating point(s) may be desired for example in order to monitor operation of autonomous or manually operated mining vehicles, for example to keep track of the number of executed operating cycles and events associated with the operating points, such as for example loading or dumping events associated with loading or dumping points, respectively. An operating cycle may comprise a set of operations configured to be performed by a mining vehicle at a respective plurality of operating points. For example, each operating point of the operating cycle may be associated with a particular operation. An operation associated with a particular operating point may be different from operation(s) associated with other operating point(s). An operating cycle may therefore comprise different operations for different types of operating points such as a loading point and a dumping point. An operating cycle may therefore comprise a cycle of operations configured to be performed at particular positions within a mine or other working area of the mining vehicle. Example embodiments of the present disclosure provide methods for recording events associated with operating points of a mining vehicle.

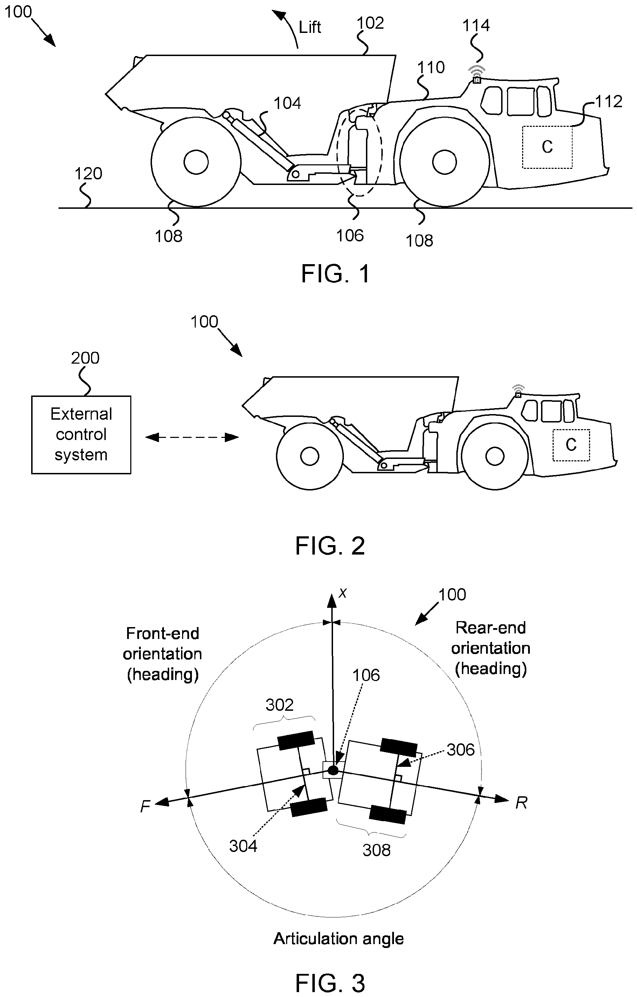

FIG. 1 illustrates an example of a mining vehicle. Example embodiments disclosed herein may relate to various mining vehicles, represented throughout the description by dumper 100. However, it is appreciated that the example embodiments may be applied to other types of mining vehicles, such as loaders, mining trucks, or the like.

Dumper 100 may be a manually operated mining vehicle. For example, dumper 100 may be configured to be operated locally by a human operator sitting inside a cabin of dumper 100 or remotely via a remote operation station located external to dumper 100, for example outside the mine.

Alternatively, dumper 100 may be an automated mining vehicle. An automated mining vehicle such as an automated dumper operating in an automatic mode may be configured to, for example, receive a task to be performed, perceive (portions) of the environment of the automated vehicle, and autonomously perform the task while taking the environment into account. An automated mining vehicle operating in an automatic mode may be configured to operate independently but may be taken under external control at certain operation areas or conditions, such as during states of emergencies. As noted above, example embodiments of the present disclosure may be however applied also in non-autonomous or semi-autonomous mining vehicle, for example remote-controllable mining vehicles.

Dumper 100 may comprise a movable carrier 110 comprising, for example a motor and wheels 108 for enabling movement of dumper 100. Dumper 100 may comprise a dump box 102 configured to receive a load of mining material. Dumper 100 may comprise components, such as hydraulic cylinder 104, configured to lift dump box 102 to cause mining material provided at dump box 102 to be dumped, for example to ground 120 (e.g., floor of a tunnel or a pit). Movable carrier 110 may be configured to move autonomously or it may be configured to be controlled by a human operator, either remotely or locally at dumper 100. Dump box 102 may be configured to be controlled with, for example, mechanical switches or manual controllers installed at a user interface of dumper 100 or a remote operator station, or by a controller 112 (e.g., a control apparatus) configured to control operation of dumper 100. In case of an autonomously operating dumper, controller 112 may be configured to control lifting of dump box 102. Controller 112 may be also configured to control other aspects of dumper 100, such as parts of movable carrier 110 like the motor and wheels.

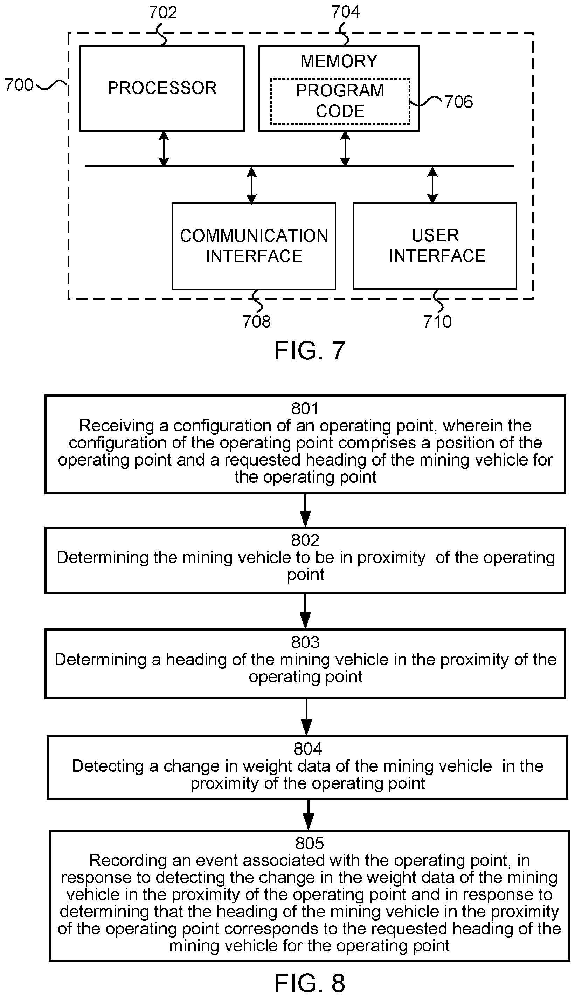

Controller 112 may be for example provided as a software application residing on a memory and being executable by a processor. An example of an apparatus suitable for implementing controller 112 is provided in FIG. 7. Controller 112 may comprise, or be communicatively coupled to, various functions, blocks, or applications for implementing functionality of controller 112. Controller 112 may comprise a navigation application configured to control, or enable a human operator or external control system 200 to control, navigation of dumper 100, for example to enable movement of movable carrier 110, to move dumper 100 to a loading position or dumping position, to control angle of dump box 102, or the like. Even though controller 112 has been described to perform some function, it is understood that controller 112 may be alternatively configured to cause performance of the function, e.g., by instructing another device or component to perform the function.

Dumper 100 may comprise a wireless positioning device 114, such as for example an RFID reader configured to detect RFID tags distributed in the working environment of dumper 100, such as a mine. Alternatively, or additionally, dumper 100 may comprise scanning device(s) for capturing and providing a representation of objects around dumper 100. The scanning device(s) may comprise, for example, one or more of the following: one or more cameras, one or more radio detection and ranging (radar) sensors, or one or more light detection and ranging (lidar) sensors. Based on the scanning, controller 112, or dumper 100 in general, may be configured to obtain point cloud data that represents the scanned environment.

The point cloud data may for example comprise a three-dimensional representation of the objects observable in the environment of dumper 100. The scanning may be implemented, for example, with a simultaneous localization and mapping (SLAM) system, which may be configured to scan environment of dumper 100 to obtain point cloud data of surrounding surfaces or objects and to detect the position of dumper 100. The obtained point cloud data may be used for determining position of dumper 100 based on comparing the scanning data to reference data, such as for example a 3D model of a mining tunnel. The position of dumper 100 may be defined in an external coordinate frame, which may be stationary with respect to ground, for example on a map of a mine.

Dumper 100 may be configured to be controlled by a remote control device (not illustrated in FIG. 1), which may be external to dumper 100. The remote control device may be for example a server located remote from dumper 100, for example outside the mine. Functionality of controller 112 may be distributed between dumper 100, for example a local controller of dumper 100, and the remote control device. Information may be exchanged between the remote control device and dumper 100 over a communication interface including any suitable wireless and/or wired connection. Examples of suitable communication interfaces are described with reference to FIG. 7.

FIG. 2 illustrates an example of a mining vehicle communicatively coupled to an external control system. External control system 200 may be responsible of controlling and/or monitoring operation of mining vehicle(s), for example by configuration of operating point(s) for the mining vehicle(s) and maintaining information about events associated with the operating points.

External control system 200 may comprise controller, e.g., a control apparatus or control circuitry, which may be structurally similar to controller 112. External control system 200 may be located external to dumper 100. Example embodiments of the present disclosure may be implemented by controller 112, a mining vehicle such as dumper 100, optionally in combination with external control system 200. Information may be exchanged between external control system 200 and dumper 100 (e.g., controller 112) over a communication interface including any suitable wireless and/or wired connection. Dumper 100 (e.g., controller 112) may comprise communication circuitry, such as a transceiver, for communicating data with other devices or systems such as external control system 200. Examples of suitable communication interfaces are described with reference to FIG. 7. External control system 200 may comprise a communication interface, which may be configured for transmission and/or reception of data from devices external to external control system 200, for example dumper 100. The communication interface is not illustrated in FIG. 2, but it may be similar to communication interface 710 of FIG. 7.

FIG. 3 illustrates an example of an articulated mining vehicle. Dumper 100 is provided as an example of an articulated mining vehicle comprising an articulation point connecting its front and rear ends. An articulated mining vehicle may comprise pivot joint 106, which may improve manoeuvrability of the vehicle such as dumper 100, for example when navigating through tight turns or uneven terrain.

An orientation of front end 302 of dumper 100 may be defined with reference to a predefined axis, which may be parallel to ground or perpendicular to vector of gravity. The orientation of front end 302 may comprise an angle between a forward driving direction (F) of dumper 100 and the predefined axis, e.g., on the plane perpendicular to the vector of gravity. A straight forward driving direction may comprise a direction that is substantially perpendicular to front axle 304 of dumper 100. Front axle 304 may be configured to connect front wheels of dumper 100. The orientation of rear end 308 of dumper 100 may comprise an angle between a backward (e.g., reverse) driving direction (R) of dumper 100 and the predefined axis. A straight backward driving direction may comprise a direction that is substantially perpendicular to rear axle 306 of dumper 100. Rear axle 306 may be configured to connect rear wheels of dumper 100. The articulation angle may comprise an angle between longitudinal axes of front end 302 and rear end 308, as illustrated in FIG. 3. Alternatively, the articulation angle may comprise an angle between front and rear axles 304, 306 of dumper 100. In general, the articulation angle may be indicative of the orientation of front end 130 with respect to rear end 308. Front end 302 may be coupled to rear end 308 by pivot joint 106.

Heading of dumper 100 may comprise the orientation of either end of dumper 100, for example the straight forward or straight backward driving direction. For example, when stopping at a loading point, the heading of dumper 100 may comprise the straight forward driving direction or the front-end orientation of dumper 100. On the other hand, when reversing to a dumping point, the heading of dumper 100 may comprise the straight backward driving direction or the rear-end orientation of dumper 100. The heading of dumper 100 may be therefore dependent on the type of operating point.

Furthermore, the heading of a mining vehicle may be dependent on the type of the mining vehicle. For example, a loader with a bucket in front of the loader may be configured to drive forward to a dumping position. In this case, the heading of the loader may be the straight forward driving direction or the front-end orientation of the loader also for the dumping point. Controller 112 may be configured to determine the heading of a mining vehicle based on the type of the operating point and/or the type of the mining vehicle.

Even though illustrated as an articulated mining vehicle, corresponding definitions of orientation angles may be used also in case of a non-articulated mining vehicles. In that case the (straight) backward driving direction may be opposite to the forward driving direction. Furthermore, corresponding definitions of the orientation may be provided for other types of mining machines. For example, in case of a track-mounted mining vehicle, the (straight) forward driving direction or the (straight) backward driving direction may be parallel to lines defined by tracks of the track-mounted mining vehicle.

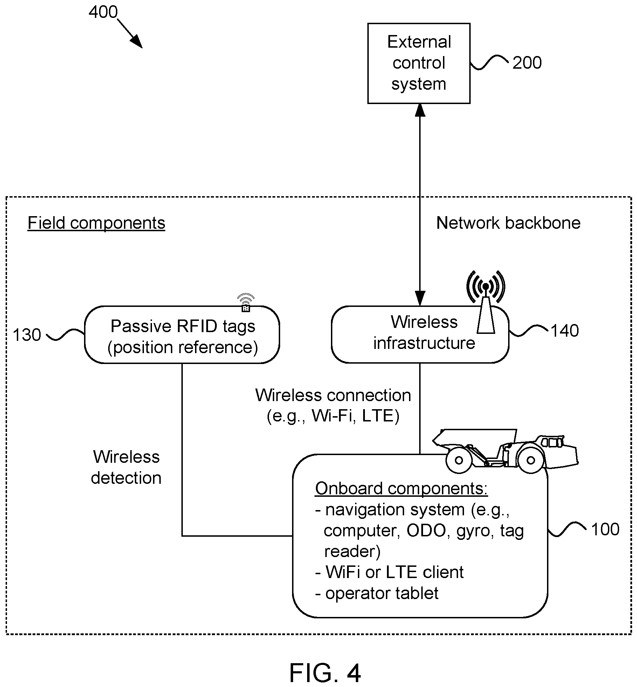

FIG. 4 illustrates an example of a mining automation system. Mining automation system 400 may comprise external control system 200 and field components such as passive radio frequency identification (RFID) tags 130 and/or wireless communication infrastructure 140. Mining automation system 400 may comprise one or more mining vehicles such as dumper 100, which may comprise onboard components such as for example a navigation system comprising, for example, a computer, an odometer, a gyroscope, or an RFID tag reader; a wireless communication client such as a Wi-Fi or 3GPP LTE (long-term evolution) client; and/or an operator tablet. Wireless communication infrastructure 140 may comprise one or more wireless access points configured to enable a wireless connection to mining vehicle(s). A network backbone may connect external control system 200 to mining vehicle(s) 100 via wireless communication infrastructure 140. Alternatively, external control system 200 may be wirelessly connected to mining vehicle(s) directly.

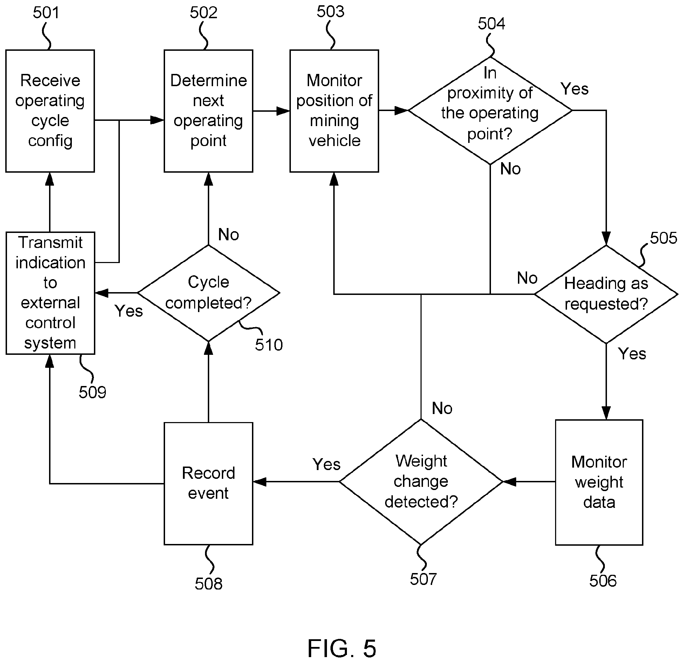

FIG. 5 illustrates an example of a flow chart for detecting an event associated with an operating point of a mining vehicle. Even though operations of FIG. 5 have been described to be performed by controller 112, it is understood that similar functionality may be implemented by any suitable component of a mining vehicle, such as dumper 100.

At operation 501, controller 112 may be configured to receive a configuration of operation cycle, for example from external control system 200. The configuration of the operating cycle may comprise one or more operating points. For example, the configuration of the operating cycle may comprise configuration(s) of the operating point(s). The operating point(s) may be associated with particular operation(s) such as loading or dumping, for example loading or dumping mining material such as waste rock, mineral ore, or the like. An operation point may therefore comprise a loading point or a dumping point, or another type of operating point such as a charging point for electrically charging the mining vehicle or a battery swap point for replacing battery of the mining vehicle. Alternatively, controller 112 may be configured to receive a configuration of individual operating point(s), for example without the operating point(s) being associated with an operation cycle, or a configuration thereof. Controller 112 may be configured to receive the configuration of the operation point(s) from external control system 200.

A configuration of an operating point may comprise a position of the operating point, for example as a point (e.g., coordinates) on a map of a mine. The configuration of the operating point may comprise a requested heading for the mining vehicle at the operating point. The requested heading may be associated with a task configured to be performed at the operating point, for example by mining vehicle itself or by another mining machine with mining vehicle as an object (e.g., another mining machine loading mining material at dump box 102 of dumper 100). The requested heading may comprise a requested orientation of the front end of the mining vehicle or a requested heading of the rear end of the mining vehicle. As noted above, controller 112 might be configured to determine, based on the type of the operating point, whether the requested heading is configured for the front end or the rear end of the mining vehicle.

At operation 502, controller 112 may be configured to determine next operating point. Controller 112 may be configured to determine the next operating point based on the configuration of the operating cycle, for example as the next uncompleted operating point in a sequence of operating points listed in the configuration of the operating cycle. When reaching the last operating point of the operating cycle, controller 112 may be configured to select again the first operating point of the operating cycle as the next operating point. In case of an individual operating point, controller 112 may be configured to select an operating point included in a configuration received from external control system 200.

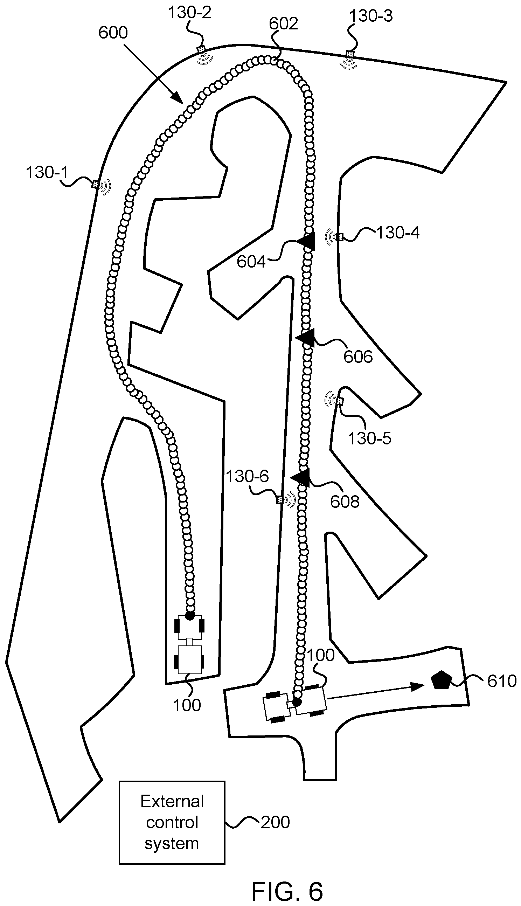

Considering the example of FIG. 6, controller 112 might determine loading point 604 as the next operating point, when initiating route 600 defined by route points 602. Loading point 604 might belong to an operating cycle comprising also dumping point 610 and optionally other loading point(s) 606, 608.

At operation 503, controller 112 may be configured to monitor the position of the mining vehicle, for example based on dead reckoning algorithm(s), operating for example on odometer and/or gyroscope readings of the mining vehicle. Controller 112 may be configured to determine or adjust the position based on RFID reference points provided by RFID distributed within mine, e.g., every 30-60 meters. Alternatively, controller 112 may be configured to monitor the position of the mining vehicle based on the SLAM system or by detecting signals from particular RFID tags 130 or other wireless positioning devices. Referring again to the example of FIG. 6, controller 112 might be configured to determine and monitor the position of dumper 100 based on dead reckoning algorithm(s), SLAM, and/or signals detected from RFID tag(s) 130-1 to 130-6, collectively referred to as RFID tags 130, as will be further described below.

At operation 504, controller 112 may be configured to determine whether the mining vehicle is in proximity of the operating point. Controller 112 may be configured to determine that the mining vehicle is in proximity of the operating point, in response to detecting a distance between the position of the mining vehicle and the position of the operating point to be shorter than a threshold. For example, controller 112 may be configured to determine the position of the mining vehicle based on the dead reckoning algorithm(s) or the SLAM system. Controller 112 may be configured to determine a distance between the position of the mining vehicle and the operating point, e.g., based on their coordinates. Controller 112 may be configured to determine the mining vehicle to be in the proximity of the operating point, if the distance is shorter that a threshold, e.g., 5 to 10 metres.

Alternatively, or additionally, controller 112 may be configured to determine the mining vehicle to be in the proximity of the operating point based on a signal received from an RFID tag 130 or other wireless positioning device associated with the operating point. An operating point may be associated with a particular RFID tag, which may be located at the operating point. Controller 112 may be configured to determine that the mining vehicle is in the proximity of the operating point, in response to detecting the signal from RFID tag 130 associated with the operating point or in response to detecting received signal strength of the signal to be above a threshold. In this case, controller 112 may be configured not to monitor the position of the mining vehicle based on the dead reckoning algorithm(s) or the SLAM system. This provides the benefit of reducing complexity by enabling controller 112 to determine the vehicle location without using, or being configured with, such algorithm(s) or system. For example, controller 112 might be configured to determine that the mining vehicle is in proximity of operating point 604 based on a signal received from respective RFID tag 130-4.

Controller 112 may move back to execution of operation 503, in response to determining that the mining vehicle is not in the proximity of the operating point. Controller 112 may move to execution of operation 505, in response to determining that the mining vehicle is in the proximity of the operating point.

At operation 505, controller 112 may be configured to determine whether the heading of the mining vehicle is as requested. Controller 112 may be configured to determine, e.g., based on the type of the operating point and/or the type of the mining vehicle, whether the heading concerns the front end or rear end of the mining vehicle. Controller 112 may be configured to determine the (current) heading of the mining vehicle, for example the heading of the determined part (e.g., front or rear end) of the mining vehicle. Controller 112 may be configured to determine the heading based on gyroscope reading(s) of the mining vehicle, for example reading(s) of gyroscope(s) located at the front or rear end of the mining vehicle. Alternatively, the heading may also be determined using the dead reckoning algorithm, which combines gyroscope reading(s) with data from other sensors, to estimate the heading trajectory
Controller 112 may be configured to compare the determined heading to the requested heading indicated in the configuration of the operating point and determine whether the heading of the mining vehicle corresponds to the requested heading, for example by being sufficiently close to the requested heading such as within a predetermined angular tolerance, for example ± 5 degrees. As operation 505 may be executed after operation 504, controller 112 may be configured to determine both the heading of the mining vehicle and the correspondence of the heading of the mining vehicle with the requested heading in the proximity of the operating point.

At operation 506, controller 112 may be configured to monitor weight data of the mining vehicle, for example weight of mining material at dump box 102 of dumper 100. It is noted that controller 112 may be configured to monitor any suitable weight data of the mining vehicle that is indicative of the weight of mining material carried by the mining vehicle, for example at dump box 102, or other relevant object configured to be loaded or unloaded. Controller 112 may be configured to receive the weight data from weight sensor(s), which may be coupled to any suitable part of the mining vehicle, for example dump box 102.

Controller 112 may be configured to initiate the monitoring of the weight data, in response to determining that the mining vehicle is in the proximity of the operating point (cf., operation 504). Controller 112 may be configured to initiate the monitoring of the weight data, in response to determining that the heading of the mining vehicle corresponds to the requested heading of the mining vehicle for the operating point. Controller 112 may be configured to apply either or both of the above conditions for initiating the monitoring of the weight data. Initiating monitoring of the weight data based on such condition(s) provides the benefit of enabling to avoid capturing irrelevant weight data. For example, if loading point 604 is occupied by another mining vehicle and the mining vehicle needs to stop before the operating point, e.g., beyond the threshold for determining whether the mining vehicle is in the proximity of loading point 604, unnecessary monitoring of the weight data may be avoided.

Alternatively, controller 112 may be configured to monitor the weight data without considering whether the mining vehicle is located in the proximity of the operating point or not, or without considering the heading of the mining vehicle. This provides the benefit of simplifying system requirements.

Controller 112 may be configured to initiate the monitoring of the weight data of the mining vehicle, in response to determining that the mining vehicle is substantially stationary with respect to ground, e.g., the speed of the mining vehicle (e.g., a carrier of the mining vehicle) being zero or below a threshold. This provides the benefit of reducing complexity, because monitoring of the heading and weight data during movement of the mining vehicle may be avoided. Controller 112 may be configured to determine that the mining vehicle is stationary, even if mining vehicle were to move with respect to ground to some extent, for example because of the motor of the mining vehicle being running during loading of the mining material. The mining vehicle being substantially stationary may for example enable a stationary mining machine to load the mining vehicle with mining material.

At operation 507, controller 112 may be configured to detect a change in the weight data of the mining vehicle. Considering that operation 507 may be performed following the 'Yes' branch from operation 504, controller 112 may be configured to detect the change when it is in proximity of the operating point. Considering that operation 507 may be performed following the 'Yes' branch from operation 505, controller 112 may be configured to detect the change, in response to detecting that the heading of the mining vehicle corresponds to the heading requested for that operation point. Controller 112 may be configured to detect the change based on detecting a difference between different, e.g., successive, readings of the weight sensor(s) to be above a threshold. The threshold may be dependent on the loading capacity of the mining vehicle, for example 5 to 10 % of the loading capacity. Using such a threshold provides the benefit of avoiding false detection of events, for example due to fluctuation in the weight data caused by vibration, deformation of the load, or other environmental factors. Alternatively, the threshold may be dependent on the weight of an object, e.g., battery or a tool, configured to be installed or replaced at the operating point.

Controller 112 may be configured to move back to execution of operation 503 to continue monitoring the position of the mining vehicle with respect to the same operating point or other operating point(s). Even though not illustrated in FIG. 5, controller 112 might be configured to monitor the position of the mining vehicle with respect to a plurality of operating points, for example simultaneously or sequentially. Controller 112 might be also configured to apply a requested heading associated with a particular operating point, in response to detecting the mining vehicle to be in proximity of that operating point. This provides the benefit of enabling recovery from a situation where an event is not detected at some operating point and the mining vehicle moves to another operating point for performance of an operation associated therewith.

For example, the mining vehicle might be configured with an operating cycle comprising loading points 604, 606 and dumping point 610, as illustrated in FIG. 6. Controller 112 might be configured to monitor the position of the mining vehicle with respect to both of these loading points, or in general with respect a plurality of operation points, e.g., operating points of the operating cycle. In case nothing is loaded on the mining vehicle at operating point 604, the mining vehicle might move to loading point 606 without controller 112 detecting a weight change or recording a loading event at loading point 604. Monitoring the position of the mining vehicle also with respect to loading point 606 enables a loading event to be detected at loading point 606, even if no loading event was detected at loading point 604.

Controller 112 may be configured to move to execution of operation 508, in response to detecting the change in the weight data.

At operation 508, controller 112 may be configured to record an event associated with the operating point. The operating point may be the operating point, in proximity of which the mining vehicle was detected to be at operation 504. The event may be related to transfer of mining material, for example by being a loading event or a dumping event indicative of loading mining material at the mining vehicle or dumping mining material from the mining vehicle, respectively. Controller 112 may be configured to detect the event based on weight data of the mining vehicle, e.g., weight of mining material at a bucket of a loader or dump box 102 of dumper 100. Even though dumping and loading mining material are provided as examples of events that may be detected based on the weight change, it is noted that various other events may be detected based on the weight data. For example, a battery swap event associated with a battery swap point or a tool replacement event associated with a tool replacement point could be recorded based on detecting the weight of the mining vehicle to first decrease when the battery or tool is removed and then to increase again when a new battery or tool is installed.

Considering operations 504, 505, and 507, controller 112 may be configured to record the event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point. Controller 112 may be therefore configured to record the event, in response to determining that the three following conditions are fulfilled: 1) the mining vehicle is in the proximity of the operating point, 2) the heading of the mining vehicle corresponds to the requested heading, and 3) at least one weight change is detected. This provides the benefit of improving reliability of detecting events associated with operating points, because an event is not detected if any of the conditions is not fulfilled. Alternatively, controller 112 might be configured to detect the event based on any or any pair of the above three conditions.

Controller 112 may be configured to determine the type of the event to be recorded based on characteristics of the weight change(s), e.g., whether weight of the mining material, or any part of the mining vehicle in general, increases or decreases. For example, controller 112 may be configured to record a loading event, in response to detecting the change in weight data to indicate that weight of the mining material has increased. Controller 112 may be configured to record a dumping event, in response to detecting the change in weight data to indicate that weight of the mining material has decreased. Controller 112 may be configured to detect a battery swap event or a tool replacement event, in response to detecting changes in the weight data to be indicative of successive decrease and increase of the weight of the mining vehicle.

Controller 112 may be configured to compare the type of event determined based on the characteristics of the weight change to the type of operating point indicated in the configuration of the operating point. Controller 112 might be configured to record the event, in response to determining that the type of the event determined based on the characteristics of the weight change(s) corresponds to the type of operating point indicated in the configuration of the operating point. This provides the benefit of improving reliability of detecting and recording events, because recording of the event is conditioned on whether the types of the detected event and configured type of the operating point match. Alternatively, controller 112 might be configured to record a particular type of event based on the type of the event as indicated in the configuration of the operating point, without considering the characteristics of the weight change. In other words, controller 112 may trust that the correct type of operation is performed at the operation point. This provides the benefit of enabling low-complexity implementation, for example to reduce the amount of needed processing power. Furthermore, this may improve flexibility of the system, since it enables different types of events to be performed and validly detected at same operating point.

Depending on configuration of controller 112 and other circumstances, e.g., status of the wireless connection between controller 112 and external control system 200, controller 112 may be configured to move from operation 508 to operation 509 or 510, as will be further described below.

At operation 509, controller 112 may be configured to transmit an indication of the recorded event. The indication may be transmitted to external control system 200. This provides the benefit of enabling external control system 200 to monitor performance of events at configured operation points, for example in order to monitor progress of operating cycles configured for one or more mining vehicles. External control system 200 may be configured to provide information about the recorded events to a human operator, for example via a user interface of external control system 200 or by transmitting indication(s) of recorded events to another device. Controller 112 may be configured to transmit the indication, in response to completing recording of the event it (e.g., without any substantial delay) or according to a predetermined schedule, such as once a minute. Controller 112 may be configured to move from execution of operation 509 back to operation 501 for receiving a configuration of another operating cycle or to operation 502 for determining a next operating point of the current operating cycle.

Alternatively, controller 112 may be configured to transmit an indication of recorded events, in response to completion of the operation cycle, as described below for operation 510.

At operation 510, controller 112 may be configured to determine whether the operating cycle has been completed. Controller 112 may be configured to determine that the operation cycle has been completed, for example based on detecting an event associated with the last operating point of the operating cycle. Controller 112 may move to execution of operation 509 to transmit an indication of events recorded during the operating cycle, in response to determining that the operation cycle has been completed. This provides the benefit of enabling external control system 200 to monitor the progress of the mining vehicle. Transmitting the indication upon completion of the operating cycle provides the benefit of reducing the amount of data traffic and thereby enables a higher number of mining vehicles to be successfully monitored by external control system 200. Considering the cycle of operations 502 to 508 and operation 510 via the 'No' branch of operation 510, controller 112 may be configured to record a plurality of events during the operating cycle, for example loading and dumping events. Controller 112 may be configured to buffer the recorded events, for example in a transmission buffer of controller 112 or any other suitable memory associated therewith. Controller 112 may be configured to transmit indication(s) of the buffered events upon completion of the operating cycle.

Alternatively, or additionally, controller 112 may be configured to buffer the recorded events, in response to determining that the connection to external control system 200 has been lost. Controller 112 may be configured to determine that the connection to external control system 200 has been lost, in response to receiving a corresponding indication from communication circuitry (e.g., Wi-Fi circuitry) of the mining vehicle or controller 112, or in response to determining that controller 112 has not received any messages from external control system 200, for example during a predetermined time period. Controller 112 may be configured to transmit an indication of the recorded events (e.g., loading events or dumping events), in response to determining that the connection to external control system 200 has been re-established. Controller 112 may be configured to determine that the connection to external control system 200 has been re-established, in response to receiving a corresponding indication from the communication circuitry, or in response to determining that controller 112 has again received at least one message from external control system 200. Buffering the recorded events provides the benefit of storing recorded events locally when the connection to the external control system is lost thereby preserving loading and dumping events.

Example embodiments of the present disclosure therefore provide a monitoring system with methods for monitoring performance of events by manually-controlled mining vehicles at configured operation points of a mine. Example embodiments of the present disclosure may be however applied also in case of autonomous mining vehicles.

FIG. 7 illustrates an example of an apparatus 700 configured to practise one or more example embodiments. Apparatus 700 may be or comprise a control device, such as for example a server, communicatively coupled to dumper 100, a control apparatus located at dumper 100, controller 112, dumper 100 itself, external control system 200, or in general any apparatus or system configured to implement the functionality described herein. Although apparatus 700 is illustrated as a single device, it is appreciated that, wherever applicable, functions of apparatus 700 may be distributed to a plurality of physically separate apparatuses, for example different components or subsystems of external control system 200.

Apparatus 700 may comprise at least one processor 702. The at least one processor 702 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 704 may be also embodied separate from apparatus 700, for example as a computer readable (storage) medium, examples of which include memory sticks, compact discs (CD), or the like.

When apparatus 700 is configured to implement some functionality, some component and/or components of apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as software components. According to an example embodiment, apparatus 700 comprises a processor or processor circuitry, such as for example a microcontroller, configured by the program code 706, when executed, to execute the embodiments of the operations and functionality described herein. Program code 706 is provided as an example of instructions which, when executed by the at least one processor 702, cause performance of apparatus 700.

For example, controller 112 may be at least partially implemented as program code 706 configured to cause apparatus 700 to perform functionality of controller 112. Similarly, transmission or reception of data (e.g., indication(s) of recorded event(s)) over an internal or external communication interface of controller 112 or a mining vehicle such as dumper 100 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), or the like.

Apparatus 700 may comprise a communication interface 708 configured to enable apparatus 700 to transmit and/or receive information. Communication interface 708 may comprise an internal or external communication interface, such as for example a radio interface between a mining vehicle such as dumper 100 and external control system 200. Apparatus 700 may further comprise other components and/or functions such as for example user interface 710 comprising at least one input device and/or at least one output device. The input device may take various forms such as a keyboard, a touch screen, or one or more embedded control buttons. The output device may for example comprise a display, a speaker, or the like. When provided at external control system 200, user interface 710 may enable a user, e.g., a human operator, to monitor various functions and data, and to control the mining automation system, for example design and configure routes and/or operating points for mining vehicle(s).

Apparatus 700 may be configured to perform or cause performance of any aspect of the method(s) described herein. Further, a computer program or a computer program product may comprise instructions for causing, when executed by apparatus 700, apparatus 700 to perform any aspect of the method(s) described herein. Further, apparatus 700 may comprise means for performing any aspect of the method(s) described herein. In one example, the means comprises the at least one processor 702, the at least one memory 704 including program code 706 (instructions) configured to, when executed by the at least one processor 702, cause apparatus 700 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 702. Apparatus 700 may comprise means for transmitting or receiving information, for example one or more wired of wireless (e.g., radio) transmitters or receivers, which may be coupled or be configured to be coupled to one or more antennas, or transmitter(s) or receiver(s) of a wired communication interface.

According to a first aspect of the present disclosure, an apparatus may be configured to detect an event of a mining vehicle. The apparatus may comprise: at least one processor; and at least one memory including computer program code, the at least one memory and the computer program code configured to, with the at least one processor, cause the apparatus at least to: receive a configuration of an operating point, wherein the configuration of the operating point comprises a position of the operating point and a requested heading of the mining vehicle for the operating point; determine the mining vehicle to be in proximity of the operating point; determine a heading of the mining vehicle in the proximity of the operating point; detect a change in weight data of the mining vehicle in the proximity of the operating point; and record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to an example embodiment of the first aspect, the computer program code is configured to, with the at least one processor, cause the apparatus to: receive the configuration of the operating point from an external control system, wherein the external control system is external to the mining vehicle.

According to an example embodiment of the first aspect, the computer program code is configured to, with the at least one processor, cause the apparatus to: transmit an indication of the recorded event to the external control system.

According to an example embodiment of the first aspect, the operating point comprises a loading point or a dumping point, and the event comprises a loading event or a dumping event.

According to an example embodiment of the first aspect, the loading point and the dumping point are associated with an operating cycle of the mining vehicle.

According to an example embodiment of the first aspect, the computer program code is configured to, with the at least one processor, cause the apparatus to: record the loading event and the dumping event during the operating cycle of the mining vehicle; and transmit the indication of the recorded loading event and the recorded dumping event, in response to completion of the operating cycle of the mining vehicle.

According to an example embodiment of the first aspect, the computer program code is configured to, with the at least one processor, cause the apparatus to: buffer a plurality of recorded events, in response to determining that a connection to the external control system is lost.

According to an example embodiment of the first aspect, the computer program code is configured to, with the at least one processor, cause the apparatus to: transmit an indication of the plurality of recorded events, in response to determining that the connection to the external control system has been re-established.

According to an example embodiment of the first aspect, the weight data of the mining vehicle is indicative of a weight of mining material at a dump box of the mining vehicle.

According to an example embodiment of the first aspect, the computer program code is configured to, with the at least one processor, cause the apparatus to: monitor a position of the mining vehicle; determine the mining vehicle to be in the proximity of the operating point, in response to detecting a distance between the position of the mining vehicle and the position of the operating point to be shorter than a threshold.

According to an example embodiment of the first aspect, the computer program code is configured to, with the at least one processor, cause the apparatus to: determine the mining vehicle to be in the proximity of the operating point based on a signal received from a wireless positioning device associated with the operating point.

According to an example embodiment of the first aspect, the computer program code is configured to, with the at least one processor, cause the apparatus to: initiate monitoring of the weight data of the mining vehicle, in response to determining that the mining vehicle is in the proximity of the operating point.

According to an example embodiment of the first aspect, the computer program code is configured to, with the at least one processor, cause the apparatus to: initiate the monitoring of the weight data of the mining vehicle, further in response to determining that the heading of the mining vehicle corresponds to the requested heading of the mining vehicle for the operating point.

According to an example embodiment of the first aspect, the computer program code is configured to, with the at least one processor, cause the apparatus to: initiate the monitoring of the weight data of the mining vehicle, further in response to determining that the mining vehicle is substantially stationary with respect to ground.

FIG. 8 illustrates an example of a method for detecting an event of a mining vehicle, according to a second aspect of the present disclosure. The method may comprise a computer-implemented method performed by, for example, apparatus 700 such as controller 112 or a mining vehicle (e.g., dumper 100).
At 801, the method may comprise receiving a configuration of an operating point, wherein the configuration of the operating point comprises a position of the operating point and a requested heading of the mining vehicle for the operating point;
At 802, the method may comprise determining the mining vehicle to be in proximity of the operating point;
At 803, the method may comprise determining a heading of the mining vehicle in the proximity of the operating point;
At 804, the method may comprise detecting a change in weight data of the mining vehicle in the proximity of the operating point;
At 805, the method may comprise recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

According to an example embodiment of the second aspect, the method comprises: receiving the configuration of the operating point from an external control system, wherein the external control system is external to the mining vehicle.

According to an example embodiment of the second aspect, the method comprises: transmitting an indication of the recorded event to the external control system.

According to an example embodiment of the second aspect, the operating point comprises a loading point or a dumping point, and the event comprises a loading event or a dumping event.

According to an example embodiment of the second aspect, the loading point and the dumping point are associated with an operating cycle of the mining vehicle.

According to an example embodiment of the second aspect, the method comprises: recording the loading event and the dumping event during the operating cycle of the mining vehicle; and transmitting the indication of the recorded loading event and the recorded dumping event, in response to completion of the operating cycle of the mining vehicle.

According to an example embodiment of the second aspect, the method comprises: buffering a plurality of recorded events, in response to determining that a connection to the external control system is lost.

According to an example embodiment of the second aspect, the method comprises: transmitting an indication of the plurality of recorded events, in response to determining that the connection to the external control system has been re-established.

According to an example embodiment of the second aspect, the weight data of the mining vehicle is indicative of a weight of mining material at a dump box of the mining vehicle.

According to an example embodiment of the second aspect, the method comprises: monitoring a position of the mining vehicle; determining the mining vehicle to be in the proximity of the operating point, in response to detecting a distance between the position of the mining vehicle and the position of the operating point to be shorter than a threshold.

According to an example embodiment of the second aspect, the method comprises: determining the mining vehicle to be in the proximity of the operating point based on a signal received from a wireless positioning device associated with the operating point.

According to an example embodiment of the second aspect, the method comprises: initiating monitoring of the weight data of the mining vehicle, in response to determining that the mining vehicle is in the proximity of the operating point.

According to an example embodiment of the second aspect, the method comprises: initiating the monitoring of the weight data of the mining vehicle, further in response to determining that the heading of the mining vehicle corresponds to the requested heading of the mining vehicle for the operating point.

According to an example embodiment of the second aspect, the method comprises: initiating the monitoring of the weight data of the mining vehicle, further in response to determining that the mining vehicle is substantially stationary with respect to ground.

The method may be performed by controller 112 or a mining vehicle such as dumper 100, for example based on program code 706, when executed by processor 702. Various examples of the methods are explained above with regard to functionalities of controller 112 and are therefore not repeated here. It should be understood that example embodiments described may be combined in different ways unless explicitly disallowed.

According to a third aspect, an apparatus may comprise: means for receiving a configuration of an operating point, wherein the configuration of the operating point comprises a position of the operating point and a requested heading of the mining vehicle for the operating point; means for determining the mining vehicle to be in proximity of the operating point; means for determining a heading of the mining vehicle in the proximity of the operating point; means for detecting a change in weight data of the mining vehicle in the proximity of the operating point; and means for recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point. The apparatus may comprise means for performing any example embodiment of the method of the second aspect.

According to a fourth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: receive a configuration of an operating point, wherein the configuration of the operating point comprises a position of the operating point and a requested heading of the mining vehicle for the operating point; determine the mining vehicle to be in proximity of the operating point; determine a heading of the mining vehicle in the proximity of the operating point; detect a change in weight data of the mining vehicle in the proximity of the operating point; and record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point. The computer program, the computer program product, or the (non-transitory) computer-readable medium may comprise program instructions which, when executed by an apparatus, cause the apparatus to perform any example embodiment of the method of the second aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or". As used herein "at least one" or "one or more" may be understood as "any one of the at least one" or "any one of the one or more".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for detecting an event of a mining vehicle, the apparatus comprising:
at least one processor; and
at least one memory including program code, the at least one memory and the computer program code configured to, with the at least one processor, cause the apparatus at least to:
receive a configuration of an operating point, wherein the configuration of the operating point comprises a position of the operating point and a requested heading of the mining vehicle for the operating point;
determine the mining vehicle to be in proximity of the operating point;
determine a heading of the mining vehicle in the proximity of the operating point;
detect a change in weight data of the mining vehicle in the proximity of the operating point; and
record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

2. The apparatus according to claim 1, wherein the computer program code is further configured to, with the at least one processor, cause the apparatus to:
receive the configuration of the operating point from an external control system, wherein the external control system is external to the mining vehicle.

3. The apparatus according to claim 2, wherein the computer program code is further configured to, with the at least one processor, cause the apparatus to:
transmit an indication of the recorded event to the external control system.

4. The apparatus according to any of claims 1 to 3, wherein the operating point comprises a loading point or a dumping point, and wherein the event comprises a loading event or a dumping event, respectively.

5. The apparatus according to claim 4, wherein the loading point and the dumping point are associated with an operating cycle of the mining vehicle.

6. The apparatus according to claim 5, wherein the computer program code is further configured to, with the at least one processor, cause the apparatus to:
record the loading event and the dumping event during the operating cycle of the mining vehicle; and
transmit the indication of the recorded loading event and the recorded dumping event, in response to completion of the operating cycle of the mining vehicle.

7. The apparatus according to any of claims 2 to 6, wherein the computer program code is further configured to, with the at least one processor, cause the apparatus to:
buffer a plurality of recorded events, in response to determining that a connection to the external control system is lost.

8. The apparatus according to claim 7, wherein the computer program code is further configured to, with the at least one processor, cause the apparatus to:
transmit an indication of the plurality of recorded events, in response to determining that the connection to the external control system has been re-established.

9. The apparatus according to any of claims 1 to 8, wherein the weight data of the mining vehicle is indicative of a weight of mining material at a dump box of the mining vehicle.

10. The apparatus according to any of claims 1 to 9, wherein the computer program code is further configured to, with the at least one processor, cause the apparatus to:
monitor a position of the mining vehicle;
determine the mining vehicle to be in the proximity of the operating point, in response to detecting a distance between the position of the mining vehicle and the position of the operating point to be shorter than a threshold.

11. The apparatus according to any of claims 1 to 10, wherein the computer program code is further configured to, with the at least one processor, cause the apparatus to:
determine the mining vehicle to be in the proximity of the operating point based on a signal received from a wireless positioning device associated with the operating point.

12. The apparatus according to any of claims 1 to 11, wherein the computer program code is further configured to, with the at least one processor, cause the apparatus to:
initiate monitoring of the weight data of the mining vehicle, in response to determining that the mining vehicle is in the proximity of the operating point.

13. The apparatus according to claim 12, wherein the computer program code is further configured to, with the at least one processor, cause the apparatus to:
initiate the monitoring of the weight data of the mining vehicle, further in response to determining that the heading of the mining vehicle corresponds to the requested heading of the mining vehicle for the operating point.

14. The apparatus according to claim 12 or 13, wherein the computer program code is further configured to, with the at least one processor, cause the apparatus to:
initiate the monitoring of the weight data of the mining vehicle, further in response to determining that the mining vehicle is substantially stationary with respect to ground.

15. A method for detecting an event of a mining vehicle, the method comprising:
receiving a configuration of an operating point, wherein the configuration of the operating point comprises a position of the operating point and a requested heading of the mining vehicle for the operating point;
determining the mining vehicle to be in proximity of the operating point;
determining a heading of the mining vehicle in the proximity of the operating point;
detecting a change in weight data of the mining vehicle in the proximity of the operating point; and
recording an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.

16. A computer program comprising instructions which, when executed by an apparatus, cause the apparatus at least to:
receive a configuration of an operating point, wherein the configuration of the operating point comprises a position of the operating point and a requested heading of the mining vehicle for the operating point;
determine the mining vehicle to be in proximity of the operating point;
determine a heading of the mining vehicle in the proximity of the operating point;
detect a change in weight data of the mining vehicle in the proximity of the operating point; and
record an event associated with the operating point, in response to detecting the change in the weight data of the mining vehicle in the proximity of the operating point and in response to determining that the heading of the mining vehicle in the proximity of the operating point corresponds to the requested heading of the mining vehicle for the operating point.
